(19) Europäisches Patentamt

European Patent Office

Office européen des brevets

(11) **EP 1 696 194 A2**

(12) **EUROPEAN PATENT APPLICATION**

(43) Date of publication:
**30.08.2006  Bulletin 2006/35**

(21) Application number: **06250901.3**

(22) Date of filing: **20.02.2006**

(51) Int Cl.:
***F27D 19/00*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.02.2005  JP 2005047127**

(71) Applicant: **NGK INSULATORS, LTD.**
**Nagoya-city, Aichi 467-8530 (JP)**

(72) Inventor: **Noguchi, Yasushi, Leg. Affairs & Intellectual Pro.**
**Nagoya City, Aichi-ken, 467-8530 (JP)**

(74) Representative: **Paget, Hugh Charles Edward et al**
**Mewburn Ellis LLP**
**York House**
**23 Kingsway**
**London WC2B 6HP (GB)**

(54) **Method for producing ceramic structure**

(57)     There is provided a method for producing a ceramic structure, in which a concentration of at least one kind of inflammable gas (gas to be measured) in the combustion furnace is measured upon degreasing, and a condition such as temperature rise speed is adjusted according to a total concentration of the gas to be measured to control the total concentration of the gas to be measured to be a concentration of 0 to 75% of an explosion lower limit concentration of the whole gas to be measured. The method can effectively inhibit an explosion inside the furnace, can reduce the production cost, and can produce a ceramic structure with high production efficiency.

**EP 1 696 194 A2**

**Description**

Background of the Invention and Related Art Statement

The present invention relates to a method for producing a ceramic structure by degreasing and firing a ceramic formed body.

Since ceramic material such as silica and alumina is excellent in mechanical strength and durability in comparison with organic material such as plastic, ceramic material is variously used as, for example, structure material and electric/electronic material. It is general that the ceramic material is used as a ceramic structure subjected to machining to have a shape suitable for each usage. For a use such as a diesel particulate filter (DPF) for trapping particulate matter (PM) exhausted from a diesel engine (diesel engine or the like of an automobile), there is suitably used a honeycomb-shaped ceramic structure (ceramic honeycomb structure) having a large number of cells formed and separated from each other by partition walls.

As a method for producing such a ceramic structure, there has been disclosed a production method in which an organic type additive such as an organic binder and a forming auxiliary is mixed with a ceramic raw material (e.g. ceramic powder) and a dispersion medium (e.g. water) to give a mixture, which is kneaded to give clay, and the clay is formed by extrusion forming or the like, dried, and degreased/fired (see JP-A-2002-219319). In a production method as described above, degreasing/firing is conducted often with a combustion furnace which heats up using combustion heat of fuel gas as a heat source (see JP-B-7-45348).

By the way, there has been required a ceramic honeycomb structure having a low pressure loss and high treatability in a filter use such as a DPF in recent years, and increase in porosity and decrease in partition wall thickness of a ceramic honeycomb structure is rapidly making progress. This steadily increases an amount of an organic type additive (organic pore-forming agent for increasing porosity, or an organic binder or a forming auxiliary for improving formability and shape retainability).

In accordance with changes in such a state, a danger of explosion upon degreasing/firing, which has conventionally been unconsidered, has begun being pointed out. That is, since a large amount of inflammable gas is generated due to decomposition of a large amount of organic type additive contained in a ceramic formed body, and a concentration of inflammable gas in the furnace is remarkably raised in degreasing/firing using a combustion furnace as described above, a danger of explosion in the furnace has arisen.

As a measure for preventing an explosion in a furnace, there can be considered a method in which degreasing/firing is conducted in an atmosphere having a very low oxygen content with an inert gas atmosphere in a furnace. However, since this method uses an inert gas, it is necessary to substitute inert gas for gas in the furnace in addition to rise in production cost, and complex operations are forced in the process. These problems still remain, and the method is still insufficient.

In addition, there can be considered a method in which an amount of inflammable gas generated from a ceramic formed body is suppressed by lowering temperature rise speed an amount of the ceramic formed body arranged in a furnace to a level where it is sufficiently safe on the basis of a conventional rule based on experience. However, since the temperature rise speed is determined on the basis of a conventional rule based on experience in this method, there still arise problems that i) the method is yet insufficient from the viewpoint of effectively preventing explosion in a furnace, and that ii) temperature rise speed and an amount of the ceramic formed body is lowered to a level which is very low in comparison with a practically operable level to lower production efficiency, and thus there is left some room for improvement.

As described above, there has not been disclosed a method capable of reducing the production cost and producing a ceramic structure with high production efficiency in addition to effectively preventing explosion in a furnace. Therefore, creation of such a production method is earnestly desired by the industrial world.

The present invention has been made to solve the conventional technical problems described above and provides a method for producing a ceramic structure, the method being capable of reducing the production cost and producing a ceramic structure with high production efficiency in addition to effectively preventing explosion in a furnace.

Summary of the Invention

The present inventors found out that the above problems can be solved by a method in which a concentration of at least one kind of inflammable gas (hereinbelow sometimes referred to as "gas to be measured") in the combustion furnace is measured; and temperature rise speed or an amount of the ceramic formed body arranged in the combustion furnace is adjusted according to a total concentration of the gas to be measured to control the total concentration of the gas to be measured to be a predetermined concentration or lower. Specifically, according to the present invention, there is provided the following method for producing a ceramic structure.

[1] A method for producing a ceramic structure by conducting degreasing and firing a ceramic formed body containing a ceramic raw material and an organic type additive in a combustion furnace in an oxygen-containing atmosphere; wherein a concentration $[C_{Gn}]$ of at least one kind of inflammable gas (gas to be measured) in the combustion furnace is measured upon degreasing; and at least one condition selected from the group consisting of temperature rise speed, an amount of air introduced into a burner, an amount of fuel gas introduced into a burner, and an amount of the ceramic formed body arranged in the combustion furnace is adjusted according to a total concentration of the gas to be measured to control the total concentration of the gas to be measured to be a concentration of 0 to 75% of an explosion lower limit concentration $[L_1]$ calculated from the following formulae (1) and (2) of the whole gas to be measured.

[Formula 1]

$$P_{Gn} = 100 \times C_{Gn} / \sum_{n=1}^{n} C_{Gn} \qquad (1)$$

[Formula 2]

$$L_1 = 100 / \sum_{n=1}^{n} (P_{Gn}/L_{Gn}) \qquad (2)$$

(where $P_{Gn}$: ratio of a concentration of the gas to be measured to the total concentration of the gas to be measured, $C_{Gn}$: concentration (vol.%) of each gas to be measured), $L_1$: explosion lower limit concentration (vol.%) of the whole gas to be measured, and $L_{Gn}$: lower limit concentration (vol.%) of each gas to be measured)

[2] A method for producing a ceramic structure according to the above [1], wherein a THC (total hydrocarbon) concentration $[C_{HC}]$ in terms of a specific hydrocarbon and a concentration $[C_{CO}]$ of carbon monoxide in the combustion furnace is measured upon degreasing; and the total concentration $[C_{HC}+C_{CO}]$ of THC and carbon monoxide is adjusted to be a concentration of 0 to 75% of an explosion lower limit concentration $[L_2]$ calculated from the following formulae (1) and (2) of the explosion lower limit concentration $[L_2]$ of the whole THC and carbon monoxide.

$$P_{HC} = 100 \times C_{HC}/(C_{HC}+C_{CO}) \quad (3)$$

$$P_{CO} = 100 \times C_{CO}/(C_{HC}+C_{CO}) \qquad (4)$$

$$L_2 = 100/\{(P_{HC}/L_{HC})+(P_{CO}/L_{CO})\} \qquad (5)$$

(where $P_{HC}$: ratio of a THC concentration to the total concentration of THC and carbon monoxide, $C_{HC}$: THC concentration (vol.%), $P_{CO}$: ratio of carbon monoxide concentration to the total concentration of THC and carbon monoxide, $C_{CO}$: carbon monoxide concentration (vol.%), $L_2$: explosion lower limit concentration (vol.%) of the whole THC and carbon monoxide, $L_{HC}$: explosion lower limit concentration (vol.%) of a specific hydrocarbon; and $L_{CO}$: explosion lower limit concentration (vol.%) of carbon monoxide)

[3] A method for producing a ceramic structure according to the above [1] or [2], wherein feedback control is conducted by adjusting at least one condition selected from the group consisting of temperature rise speed, an amount of air introduced into a burner, and an amount of fuel gas introduced into a burner according to a total concentration of the gas to be measured upon degreasing.

[4] A method for producing a ceramic structure according to any one of the above [1] to [3], wherein the total concentration of the gas to be measured is controlled in a temperature range from 150 to 400°C.

[5] A method for producing a ceramic structure according to any one of the above [1] to [4], wherein the total concentration of the gas to be measured is controlled to be a concentration of 0 to 25% of the explosion lower limit concentration [$L_1$] of the whole gas to be measured in a temperature range from 150 to 400°C.

A production method of a ceramic structure of the present invention can effectively prevent explosion in a furnace, reduce the production cost, and produce a ceramic structure with high production efficiency.

Brief Description of the Drawings

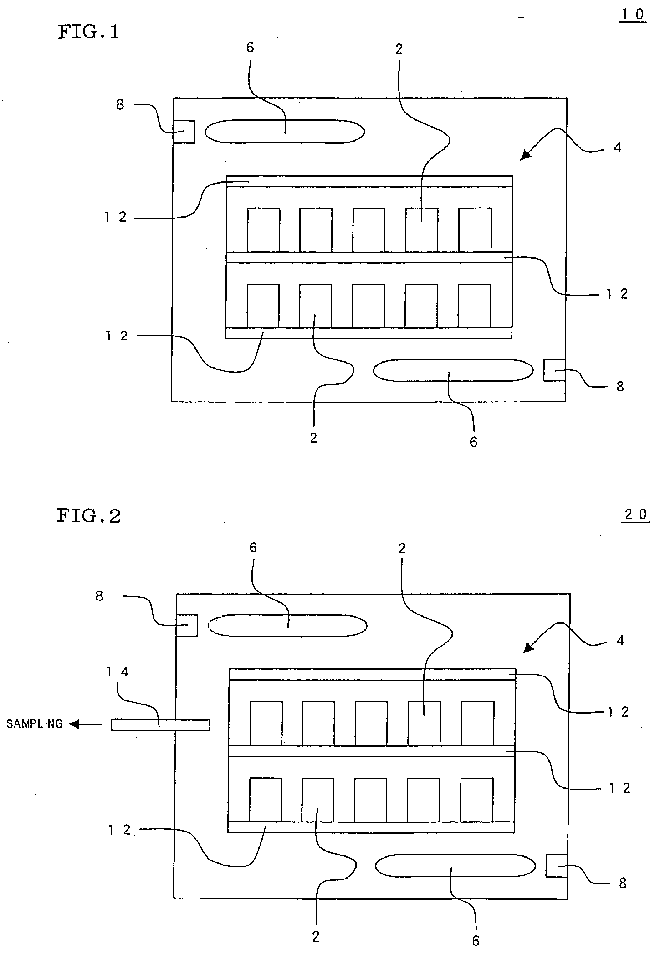

Fig. 1 is a schematic sectional view showing a constitution example of a combustion furnace usable in a production method of the present invention. Fig. 2 is a schematic sectional view showing a constitution of a combustion furnace (single kiln) used in Examples.

Detailed Description of the Invention

Hereinbelow, a best mode for carrying out a production method of a ceramic structure of the present invention will be described specifically. However, a production method of the present invention widely includes all modes having items specifying the invention and should not be limited to the following modes.

The production method of a ceramic structure of the present invention is a method in which a ceramic structure is obtained by conducting degreasing and firing a ceramic formed body containing a ceramic raw material and an organic type additive in a combustion furnace in an oxygen-containing atmosphere; and a concentration of at least one kind of inflammable gas (gas to be measured) in the combustion furnace is measured upon degreasing, and temperature rise speed, an amount of the ceramic formed body arranged in the combustion furnace, or the like, is adjusted according to a total concentration of the gas to be measured to control the total concentration of the gas to be measured to be a predetermined concentration.

[1] Ceramic formed body

In a production method of the present invention, a ceramic formed body to be fired contains a ceramic raw material and an organic type additive.

[1-1] Ceramic raw material

In a production method of the present invention, "ceramic raw material" means ceramic powdered or particle matter which can serve as an aggregate particle of a ceramic structure. There is no limitation on a ceramic seed, and various ceramic materials which have conventionally been employed as a constituent of a ceramic structure can be used. There can suitably be used, for example, silica, alumina, titania, zirconia, mullite, aluminum titanate, silicon carbide, cordierite forming material (a material containing talc, kaolin, aluminum hydroxide, or the like in such a manner that a composition after firing is a theoretical composition ($2MgO \cdot 2Al_2O_3 \cdot 5SiO_2$) of cordierite). These ceramic materials may be used alone or in combination in the form of powder or particle matter.

[1-2] Organic type additive

Generally, "an organic type additive" means organic matter added to the above ceramic raw material as a raw material of a ceramic formed body. Examples of the organic type additive include a pore forming agent, an organic binder, and a dispersant. However, "an organic type additive" in the present invention includes inorganic matter as long as it decomposes itself or generates inflammable gas by combustion. An example of such inorganic matter is carbon.

The pore forming agent is an additive for raising porosity to obtain a ceramic structure with high porosity by forming pores due to burning upon firing a honeycomb dried body, and combustibles burning out in a degreasing/firing step can suitably be used. Examples of the pore forming agent include carbon such as graphite, flour, starch, phenol resin, (methyl methacrylate), polyethylene, and poly(ethylene terephthalate). As such a pore forming agent, a resin microcapsule is sometimes used in order to reduce heat or generation of thermal stress upon combustion.

An organic binder is an additive functioning as a reinforcer imparting flowability, shape-retainability, handling strength, etc., to clay or the like serving as a raw material of a ceramic formed body, and an organic polymer or the lime can suitably be used. Examples of the organic binder include hydroxypropylmethyl cellulose, methyl cellulose, hydroxyethyl cellulose, carboxylmethyl cellulose, and poly(vinyl alcohol).

A dispersant is an additive for facilitating dispersion of ceramic raw material or the like to obtain homogeneous clay. Therefore, as the dispersant, a so-called surfactant can suitably be used. Examples of the dispersant include ethylene glycol, dextrin, fatty acid soap, and polyalcohol.

[1-3] Other constituents

A ceramic formed body in a production method of the present invention may include other substances as constituents as long as the ceramic formed body contains ceramic raw material and an organic type additive. Examples of other substances include a dispersion medium such as water and alcohol, and metal raw material in the case that the ceramic formed body is constituted by a composite material of ceramic and metal, for example, a metal silicon powder in the case that the ceramic formed body is constituted by metal silicon-bonded silicon carbide (Si-SiC).

[1-4] Production method of formed body

A ceramic formed body can be produced by mixing a dispersion medium and other additives as necessary to ceramic raw material and an organic type additive as essential components to obtain a mixture, which is kneaded and then formed.

Mixing them can be conducted with a conventionally known mixer, e.g., a sigma kneader and a ribbon mixer. Kneading the mixture can be conducted with a conventionally known kneader, e.g., a sigma kneader, a Bumbary mixer, a screw type extruder-kneader, a vacuum kneading machine, and a biaxial continuous kneading-extruder.

Forming can be conducted by a conventionally known forming method such as extrusion molding, injection molding, and press molding. However, in the case of obtaining a formed body having a honeycomb structure, it is preferable to form by extrusion molding in which clay is extruded from an extrusion die with silts having a shape complementary to that of the partition wall to be formed.

The formed body obtained as described above may be dried prior to degreasing/firing. There can be employed a conventionally known drying method such as hot air drying, microwave drying, dielectric drying, vacuum drying and freeze drying.

[2] Degreasing step

A production method of the present invention includes a degreasing step for removing an organic type additive contained in a ceramic formed body by combustion. Degreasing is conducted before firing or in process of temperature rise of firing. Since the combustion temperature of the organic binder is about 180 to 300°C, and the maximum combustion temperature of the pore forming agent is about 400°C, the degreasing temperature may be about 200 to 1000°C. Though the degreasing time is not particularly limited, it is generally about 10 to 150 hours.

In a production method of the present invention, degreasing is conducted in a combustion furnace in an oxygen-containing atmosphere. Since such a method is not required to use inert gas such as nitrogen, the production cost can be reduced in comparison with a method in which degreasing is conducted in an atmosphere having a very low oxygen content with an inert gas atmosphere in the furnace, and the process can be simplified since it is not necessary to substitute inert gas for gas inside the furnace, and thereby production efficiency can be raised.

Meanwhile, in the case of degreasing a ceramic formed body containing a large amount of organic type additive in such a method as in recent years, there is a fear of explosion inside the furnace since concentration of inflammable gas in the furnace remarkably rises. Therefore, in a production method of the present invention, it was decided to employ a method where a concentration of at least one kind of inflammable gas (gas to be measured) in the combustion furnace is measured; and at least one condition selected from the group consisting of temperature rise speed, an amount of air introduced into a burner, an amount of fuel gas introduced into a burner, and an amount of the ceramic formed body arranged in the combustion furnace is adjusted according to a total concentration of the gas to be measured to control the total concentration of the gas to be measured.

According to such a method, explosion in the furnace can effectively be prevented since a concentration of inflammable gas in the furnace can be determined based on the relation with an explosion lower limit concentration. In addition, since it is controlled on the basis of a practically measured concentration of inflammable gas, the method has high reliability in comparison with a method in which temperature rise speed or an amount of a ceramic formed body arranged in the furnace is determined based on an experience value. Further, since temperature rise speed and an amount of a ceramic formed body arranged in the furnace is determined based on a practically measured concentration of inflammable gas, it is not required to operate at a very low level in comparison with a practically operable level in consideration of safety rate, and therefore, improvement in production efficiency can be expected.

If a production method of the present invention is described more specifically, a concentration of at least one kind of inflammable gas (gas to be measured) in the combustion furnace is measured upon degreasing; and at least one condition selected from the group consisting of temperature rise speed, an amount of air introduced into a burner, an amount of fuel gas introduced into a burner, and an amount of the ceramic formed body arranged in the combustion furnace is adjusted according to a total concentration of the gas to be measured to control the total concentration of the gas to be measured to be a concentration of 0 to 75% of an explosion lower limit concentration.

Examples of inflammable gas generated in the combustion furnace upon producing a ceramic structure include decomposed matter and a volatile component. In a production method of the present invention, at least one kind of inflammable gas (gas to be measured) in the combustion furnace is measured. There is no particular limitation on kind of gas to be measured as long as it is inflammable gas generated in a combustion furnace, and arbitrary gas can be selected from inflammable gas capable of causing explosion in a furnace. Only one kind of inflammable gas may be selected, or two or more kinds of inflammable gas may be selected for the gas to be measured.

However, most of the inflammable gas generated in the furnace is mixed gas of various kinds of hydrocarbon-based compounds. Therefore, it is preferable to select a hydrocarbon-based compound as the gas to be measured from the viewpoint of effectively preventing explosion in the furnace. Since a total hydrocarbon concentration meter (hereinbelow referred to as a "THC meter", e.g., commercial name: EHF-770 produced by Anatec Yanaco ?) on the market can measure concentration and can express the concentration by a value in terms of a specific hydrocarbon (e.g., methane, propane, and ethylene), it can suitably be used in a production method of the present invention.

In addition, inflammable gas generated in a furnace is exemplified by carbon monoxide besides hydrocarbon-based compounds. Therefore, it is preferable to select carbon monoxide in addition to a carbon-based compound as the gas to be measured. Since there is a case that carbon monoxide cannot be measured with the THC meter, it is preferable that a concentration of carbon monoxide is independently measured with a gas concentration meter (e.g., commercial name: MEXA-554J produced by Horiba, Ltd.) capable of measuring carbon monoxide.

In a production method of the present invention, at least one condition selected from the group consisting of temperature rise speed, an amount of air introduced into a burner, an amount of fuel gas introduced into a burner, and an amount of the ceramic formed body arranged in the combustion furnace is adjusted according to a total concentration of the gas to be measured (that is, in the case of selecting two or more kinds of inflammable gas as the gas to be measured, the sum of the concentrations). A concentration of inflammable gas in a furnace can be reduced by lowering temperature rise speed, increasing an amount of air introduced into a burner, reducing an amount of fuel gas introduced into a burner, and reducing an amount of the ceramic formed body arranged in the combustion furnace.

In particular, in a production method of the present invention, it is preferable that feedback control is conducted by adjusting at least one condition selected from the group consisting of temperature rise speed, an amount of air introduced into a burner, and an amount of fuel gas introduced into a burner according to a total concentration of the gas to be measured. Among the above four conditions, temperature rise speed, an amount of air introduced into a burner, and an amount of fuel gas introduced into a burner are adjustable conditions in real time upon degreasing, and feed back control can be conducted in a batch where degreasing proceeds. Therefore, for example, even in the case that a concentration of inflammable gas in a furnace is incidentally raised, it exhibits preferable effect in instantly lower the concentration to effectively prevent explosion in a furnace.

Further, in a production method of the present invention, the control as described above is conducted so that the total concentration of the gas to be measured is within the range from 0 to 75% of an explosion lower limit concentration [$L_1$] calculated from the following formulae (1) and (2) of the whole gas to be measured.

[Formula 3]

$$P_{Gn} = 100 \times C_{Gn} / \sum_{n=1}^{n} C_{Gn} \qquad (1)$$

[Formula 4]

$$L_1 = 100 / \sum_{n=1}^{n} (P_{Gn}/L_{Gn}) \qquad (2)$$

(where $P_{Gn}$: ratio of a concentration of the gas to be measured to the total concentration of the gas to be measured, $C_{Gn}$: concentration (vol.%) of each gas to be measured), $L_1$: explosion lower limit concentration (vol.%) of the whole gas to be measured, and $L_{Gn}$: lower limit concentration (vol.%) of each gas to be measured).

The above formula (2) is for calculating the explosion lower limit concentration of a multi-component system and based on the Le-Chateiler principle. Specifically, the explosion lower limit concentration of the whole gas to be measured is determined by a value obtained by multiplying, by 100, a reciprocal number of the sum of the values each obtained by dividing a ratio of each gas to the total concentration of the gas to be measured by an explosion lower limit concentration of each gas to be measured.

As described above, in a production method of the present invention, it is preferable to select a hydrocarbon component and carbon monoxide as gas to be measured. In such a case, the above formulae (1) and (2) can be transformed into the following lormulae (3) to (5).

$$P_{HC} = 100 \times C_{HC}/(C_{HC}+C_{CO}) \quad (3)$$

$$P_{CO} = 100 \times C_{CO}/(C_{HC}+C_{CO}) \quad (4)$$

$$L_2 = 100/\{(P_{HC}/L_{HC})+(P_{CO}/L_{CO})\} \quad (5)$$

(where $P_{HC}$: ratio of a THC concentration to the total concentration of THC and carbon monoxide, $C_{HC}$: THC concentration (vol.%), $P_{CO}$: ratio of carbon monoxide concentration to the total concentration of THC and carbon monoxide, $C_{CO}$: carbon monoxide concentration (vol.%), $L_2$: explosion lower limit concentration (vol.%) of the whole THC and carbon monoxide, $L_{HC}$: explosion lower limit concentration (vol.%) of a specific hydrocarbon; and $L_{CO}$: explosion lower limit concentration (vol.%) of carbon monoxide).

Incidentally, it is general that a THC meter on the market expresses a value of the total concentration of hydrocarbon-based components in terms of a concentration of a specific hydrocarbon. Therefore, for "explosion lower limit concentration of a specific hydrocarbon" in the above formula (3), there may be substituted an explosion lower concentration of 5.0 (vol.%) of methane in the case that the THC meter expresses a concentration of the whole hydrocarbon-based components in terms of methane, an explosion lower concentration of 2.12 (vol.%) of propane in the case of expressing a value in terms of propane, and an explosion lower concentration of 2.75 (vol.%) of ethylene in the case of expressing a value in terms of ethylene.

In a production method of a present invention, it is necessary to control the total concentration of gas to be measured in the degreasing process. It is particularly preferable that it is conducted in a temperature range from 150 to 400°C, where an organic type additive is decomposed/combusted. This is because, since decomposition/combustion of the organic type additive is insufficiently started in a temperature range below 150°C, and since decomposition/combustion of the organic type additive has almost finished in a temperature range above 400°C, both are lacking in an actual profit.

In addition, in a production method of the present invention, it is necessary to conduct the control as described above so that the total concentration of the gas to be measured is within the range from 0 to 75% of an explosion lower limit concentration [$L_1$] of the whole gas to be measured, more preferably from 0 to 25%. A concentration above 75% of an explosion lower limit concentration [$L_1$] is not preferable because explosion in a furnace cannot be prevented effectively. Control of a concentration within the range from 0 to 25% of an explosion lower limit concentration [$L_1$] is preferable because explosion in a furnace can effectively be prevented even in the case that gas to be measured is distributed uneven in a furnace to locally raise a concentration of the gas to be measured. In the case that it is difficult to completely remove gas to be measured, it is preferable to control a concentration within the range from 1 to 75% of an explosion lower limit concentration [$L_1$] of the whole gas to be measured, more preferably 1 to 55%, and particularly preferably 1 to 25%.

Incidentally, in a production method of the present invention, an oxygen gas concentration upon degreasing is preferably controlled to be 12 to 22 vol.%. When it is below 12 vol.%, it is not preferable because it makes decomposition/combustion of an organic type additive slow and firing time long. When it is above 22 vol.%, it is not preferable because there is a fear of increasing a danger of explosion in a furnace raising a probability of causing a crack in the formed body upon firing. However, it is seldom that an oxygen gas concentration in a furnace is without the range of 12 to 22 vol.% unless an oxygen concentration is intentionally lowered when inert gas is introduced, and there are few cases that an oxygen gas concentration becomes a problem.

In a production method of the present invention, for example, a combustion furnace 10 having a constitution as shown in a schematic sectional view of Fig. 1 can be used. The combustion furnace 10 is provided with an inner room 4 serving as a space for heating a body to be heated 2 and a gas burner 8 for generating a combustion flame 6 by spraying and combusting fuel gas. In addition, the combustion furnace 10 is provided with setters 12 disposed so that it divides the inner room 4 horizontally and constituted so that efficient degreasing/firing can be conducted with a large number of bodies 2 to be heated are arranged on many stages.

[3] Firing step

In a production method of the present invention, firing is conducted after the above degreasing step. Firing is an operation for ensuring predetermined strength by densifying ceramic raw material by sintering. In a production method of the present invention, firing may be conducted according to a conventionally known firing method. Firing conditions (temperature and time) differ depending on a ceramic seed of the ceramic raw material, and suitable conditions are selected according to the ceramic seed. For example, in the case of using cordierite forming raw material as an aggregate raw material particle, firing is preferably conducted at 1410 to 1440°C for 3 to 12 hours. When the firing conditions (temperature and time) are below the above ranges, sintering of a cordierite particle is prone to be insufficient, which is not preferable. On the other hand, when the conditions are above the aforementioned ranges, formed cordierite is prone to be melted, which is not preferable.

Examples

A production method of the present invention will hereinbelow be described more specifically with Examples. However, these Examples just show a part of embodiments of a production method of the present invention, and a production method of the present invention should not be limited on the Examples described below.

[Example 1]

Production of a ceramic structure was tried by degreasing and firing a ceramic formed body in a combustion furnace in an oxygen containing atmosphere.
There was used a ceramic formed body having a honeycomb structure having an outer diameter of 300 mm, a length of 300 mm, a cell shape of a square of about 1.8 mm x 1.8 mm, a partition wall thickness of 0.3 mm, and a cell density of about 30 cells/ $cm^2$.
The above ceramic formed body was obtained by mixing 8 parts by weight of methyl cellulose as an organic binder, 20 parts by mass of a commercial poly(methyl methacrylate) resin as a pore forming agent, and 0.1 parts by mass of fatty acid soap (potassium laurate) as a dispersant with respect to 100 parts by mass of ceramic raw material containing kaolin, talc, aluminum hydroxide, alumina, and silica at the ratio of 18.5 : 40 : 15 : 14 : 12.5 to give a mixture, which was kneaded to obtain clay, which was subjected to extrusion forming and further dried by air.
As the combustion furnace for degreasing and firing, there was used a single kiln 20 having a constitution as shown in schematic sectional view of Fig. 2. The single kiln 20 was provided with an inner room 4 (effective capacity of 8 $m^2$) serving as a space for heating a body to be heated 2 and a gas burner 8 for generating a combustion flame 6 by spraying and combusting fuel gas. In addition, the combustion furnace 20 is provided with setters 12 disposed so that it divides the inner room 4 horizontally and constituted so that efficient degreasing/firing can be conducted with a large number of bodies 2 to be heated are arranged on many stages. Further, on a side wall of the inner room 4 was disposed a sampling tube 14 made of alumina for communicating the outer space with the inner room 4 to give a constitution by which sampling of an atmosphere in the inner room 4 can be conducted.
Sixty ceramic formed bodies as described above was arranged in the above single kiln, and degreasing was conducted at 150 to 400°C at temperature rise speed of 4°C /hr. As fuel gas for a gas burner was used LNG (liquefied natural gas). Total amount of the organic type additive contained in 60 ceramic formed body was 150 kg.
In Example 1, a hydrocarbon based compound and carbon monoxide was selected as gas to be measured. Therefore, upon degreasing, a THC concentration and a carbon monoxide concentration in a combustion furnace were measured, and the total concentration of THC and carbon monoxide was controlled to be a concentration of 0 to 75% of an explosion lower limit concentration of the whole THC and carbon monoxide by adjusting an amount of air introduced into a burner according to the total concentration. After that, firing was conduced at 1410 to 1430°C for 10 hours to obtain a ceramic formed body having a honeycomb shape. The results are shown in Table 1.
Incidentally, a THC concentration was measured with a THC meter (Commercial name: EHF-770 produced by Anatec Yanaco Corporation). The THC meter expresses a concentration of the whole hydrocarbon based compound as a value in terms of propane. In addition, a carbon monoxide concentration was measured with a gas concentration meter (Commercial name: MEXA-554 by Horiba, Ltd.). The gas concentration meter can measure also an oxygen gas concentration besides a carbon monoxide concentration. Therefore, an oxygen gas concentration was measured also with this gas concentration meter. The oxygen gas concentration upon degreasing was 16 to 18 vol.%.
The explosion lower limit concentration of the total THC and carbon monoxide was calculated on the basis of the following formulae (3) to (5). At this time, regarding a ratio $[P_{HC}]$ of THC with respect to the total concentration of THC and carbon monoxide and a ratio of a carbon monoxide concentration with respect to the total concentration of THC and carbon monoxide, "maximum THC concentration," "maximum CO concentration," and "maximum THC+CO concentration" in Table 1 were regarded as a THC concentration $[C_{HC}]$, an carbon monoxide concentration $[C_{CO}]$, and the total concentration $[C_{HC}] + [C_{CO}]$ of THC and carbon monoxide, respectively. With regard to an explosion lower limit concentration $[L_{HC}]$ of a specific hydrocarbon, an explosion lower limit concentration of 2.12 (vol.%) of propane was employed since the THC meter used in the present example shows a concentration in terms of propane. An explosion lower limit concentration $[L_{CO}]$ of carbon monoxide was determined as 12.50 (vol.%).

$$P_{HC} = 100 \times C_{HC}/(C_{HC}+C_{CO}) \quad (3)$$

$$P_{CO} = 100 \times C_{CO}/(C_{HC}+C_{CO}) \quad (4)$$

$$L_2 = 100/\{(P_{HC}/L_{HC})+(P_{CO}/L_{CO})\} \quad (5)$$

(where $P_{HC}$: ratio of a THC concentration to the total concentration of THC and carbon monoxide, $C_{HC}$: THC concentration (vol.%), $P_{CO}$: ratio of carbon monoxide concentration to the total concentration of THC and carbon monoxide, $C_{co}$: carbon monoxide concentration (vol.%), $L_2$: explosion lower limit concentration (vol.%) of the whole THC and carbon monoxide, $L_{HC}$: explosion lower limit concentration (vol.%) of a specific hydrocarbon; and $L_{CO}$: explosion lower limit concentration (vol.%) of carbon monoxide)

[Table 1]

| | Mass of organic matter (kg) | Amount of air introduced (Nm³/hr) | Amount of fuel gas introduced (Nm³/hr) | Temperature rise speed 150-400°C (°C/hr) | Maximum THC concentration (vol.%) | Maximum CO concentration (vol.%) | Maximum THC+CO concentration (vol.%) | THC+CO explosion lower limit concentration (A) (vol.%) | (B/A) (%) |
|---|---|---|---|---|---|---|---|---|---|
| Example 1 | 150 | 190 | 0.07 | 4 | 0.75 | 0.20 | 0.95 | 2.57 | 37 |
| Comp. Ex. 1 | 300 | 190 | 0.7 | 4 | 1.58 | 0.42 | 2.00 | 2.57 | 78 |
| Example 2 | 300 | 390 | 14 | 4 | 0.74 | 0.19 | 0.93 | 2.55 | 36 |
| Example 3 | 300 | 770 | 2.5 | 4 | 0.35 | 0.09 | 0.44 | 2.55 | 17 |
| Example 4 | 300 | 420 | 1.6 | 8 | 1.07 | 0.27 | 1.34 | 2.55 | 53 |
| Example 5 | 150 | 780 | 2.2 | 0.5 | 0.02 | 0.005 | 0.025 | 2.54 | 1 |

(Evaluation)

As a result of the above control, the maximum value of the total concentration of the whole THC and carbon monoxide upon degreasing could be controlled to be 0.95 vol.%. That is, it could be controlled to be a concentration of 0 to 75% of 2.57 vol.%, which is an explosion lower limit concentration of the whole THC and carbon monoxide, and thereby explosion in the furnace could effectively prevented.

[Comparative Example 1]

Production of ceramic structures were tried in the same conditions except that the number of formed bodies arranged in the furnace was 120 and that the total amount of an organic type additive contained in the formed bodies increased to 300kg. That is, in Comparative Example 1, an amount of air introduced into a burner, an amount of fuel gas introduced into a burner, and temperature rise speed at 150 to 400°C were completely the same as those in Example 1. The results are shown in Table 1.

[Examples 2 to 4]

In Examples 2 and 3, production of ceramic structures was tried in the same conditions as those in Comparative Example 1 except that amounts of air and fuel gas introduced was adjusted with maintaining temperature rise speed of 150 to 400°C to control the total concentration of THC and carbon monoxide. In Example 4, production of a ceramic structure was tried in the same conditions as those in Comparative Example 1 except that temperature rise speed was adjusted according to amounts of air and fuel gas introduced to control the total concentration of THC and carbon monoxide. The results are shown in Table 1.

(Evaluation)

Though the conditions in Comparative Example 1 were completely the same as those in Example 1, the maximum amount of the total concentration of THC and carbon monoxide rose up to 2.00 vol.% due to a doubled amount of an organic type additive. This concentration exceeds 75% of 2.57 vol.%, which is the explosion lower limit concentration of the whole of THC and carbon monoxide and is charged with danger of an explosion in the furnace. In contrast, in each of Examples 2 to 4, the maximum amount of the total concentration of THC and carbon monoxide was reduced to 75% or less of the explosion lower limit concentration of the whole of THC and carbon monoxide, and an explosion in the furnace could effectively be prevented.

In particular, in Example 3, the maximum amount of the total concentration of THC and carbon monoxide could be reduced to 25% or less of 2.55 vol.%, which is the explosion lower limit concentration of the whole of THC and carbon monoxide, and there was exhibited a preferable effect of effectively preventing an explosion in the furnace even in the case that THC and carbon monoxide were distributed uneven in the furnace to raise a concentration of these kinds of inflammable gas locally.

In addition, in Example 4, temperature rise speed can be made twice as that of Example 2 with maintaining the maximum value of the total concentration of THC and carbon monoxide to be 0 to 75% of 2.55 vol.%, which is the explosion lower limit concentration of the whole of THC and carbon monoxide, and there was exhibited a preferable very high effect in reducing a production cost and improving production efficiency in addition to the effect in effectively preventing explosion in the furnace.

Industrial Applicability

A method for producing a ceramic structure of the present invention can suitably be used as a method for producing a ceramic structure used in various usage, such as structural material and electric/electronic material. In particular, it can suitably used for producing a ceramic honeycomb structure having high porosity, which has to use a large amount of an organic type additive and a ceramic honeycomb structure having thin partition walls.

**Claims**

1.  A method for producing a ceramic structure by conducting degreasing and firing a ceramic formed body containing a ceramic raw material and an organic type additive in a combustion furnace in an oxygen-containing atmosphere; wherein a concentration $[C_{Gn}]$ of at least one kind of inflammable gas (gas to be measured) in the combustion furnace is measured upon degreasing; and at least one condition selected from the group consisting of temperature rise speed, an amount of air introduced into a burner, an amount of fuel gas introduced into a burner, and an amount of the ceramic formed body arranged in the combustion furnace is adjusted according to a total concentration of the gas to be measured to control the total concentration of the gas to be measured to be a concentration of 0 to 75% of an explosion lower limit concentration $[L_1]$ calculated from the following formulae (1) and (2) of the whole gas to be measured.

[Formula 1]

$$P_{Gn} = 100 \times C_{Gn} / \sum_{n=1}^{n} C_{Gn} \qquad (1)$$

[Formula 2]

$$L_1 = 100 / \sum_{n=1}^{n} (P_{Gn}/L_{Gn}) \qquad (2)$$

(where $P_{Gn}$: ratio of a concentration of the gas to be measured to the total concentration of the gas to be measured, $C_{Gn}$: concentration (vol.%) of each gas to be measured), $L_1$: explosion lower limit concentration (vol.%) of the whole gas to be measured, and $L_{Gn}$: lower limit concentration (vol.%) of each gas to be measured)

2. A method for producing a ceramic structure according to Claim 1, wherein a THC(total hydrocarbon) concentration $[C_{HC}]$ in terms of a specific hydrocarbon and a carbon monoxide concentration $[C_{CO}]$ in the combustion furnace is measured upon degreasing; and the total concentration $[C_{HC}+C_{CO}]$ of THC and carbon monoxide is adjusted to be a concentration of 0 to 75% of an explosion lower limit concentration $[L_2]$ calculated from the following formulae (1) and (2) of the explosion lower limit concentration $[L_2]$ of the whole THC and carbon monoxide.

$$P_{HC} = 100 \times C_{HC}/(C_{HC}+C_{CO}) \quad (3)$$

$$P_{CO} = 100 \times C_{CO}/(C_{HC}+C_{CO}) \qquad (4)$$

$$L_2 = 100/\{(P_{HC}/L_{HC})+(P_{CO}/L_{CO})\} \qquad (5)$$

(where $P_{HC}$: ratio of a THC concentration to the total concentration of THC and carbon monoxide, $C_{HC}$: THC concentration (vol.%), $P_{CO}$: ratio of carbon monoxide concentration to the total concentration of THC and carbon monoxide, $C_{CO}$: carbon monoxide concentration (vol.%), $L_2$: explosion lower limit concentration (vol.%) of the whole THC and carbon monoxide, $L_{HC}$: explosion lower limit concentration (vol.%) of a specific hydrocarbon; and $L_{CO}$: explosion lower limit concentration (vol.%) of carbon monoxide)

3. A method for producing a ceramic structure according to Claim 1 or 2, wherein feedback control is conducted by adjusting at least one condition selected from the group consisting of temperature rise speed, an amount of air introduced into a burner, and an amount of fuel gas introduced into a burner according to a total concentration of the gas to be measured upon degreasing.

4. A method for producing a ceramic structure according to any one of Claims 1 to 3, wherein the total concentration of the gas to be measured is controlled in a temperature range from 150 to 400°C.

5. A method for producing a ceramic structure according to any one of Claims 1 to 4, wherein the total concentration of the gas to be measured is controlled to be a concentration of 0 to 25% of the explosion lower limit concentration

[L$_1$] of the whole gas to be measured in a temperature range from 150 to 400°C.

FIG.1

FIG.2

SAMPLING